# FASCICULE DE BREVET EUROPEEN

(11) **EP 0 475 845 B1**
(45) Date de publication et mention de la délivrance du brevet: **22.06.1994**
(21) Numéro de dépôt: 91402423.7
(22) Date de dépôt: 12.09.1991
(51) Int. Cl.: B64D 10/00, A62B 7/14

(54) **Dispositif de protection physiologique des pilotes d'avions**
Vorrichtung zum physiologischen Schutz für Flugzeugführer
Device for the physiological protection of aircraft pilots

(30) Priorité: 12.09.1990 FR 9011288
(43) Date de publication de la demande: 18.03.1992
(73) Titulaire: ETAT-FRANCAIS représenté par le DELEGUE GENERAL POUR L'ARMEMENT (DPAG), F-00460 Paris Armées (FR)
(72) Inventeur: Fournol, Daniel, F-75019 Paris (FR)

(56) Documents cités:
- US-A- 2 760 484
- US-A- 4 370 975
- US-A- 4 583 522
- US-A- 4 638 791
- US-A- 4 895 320
- PROCEEDINGS OF THE 13TH ANNUAL NORTHEAST BIOENGINEERING CONFERENCE,Philadelphia, PA, 12-13 mars 1987, editor: K.R. Foster, vol. 1, pages 313-315;B.R.S. REDDY et al.: "An improved controller for a pulsating anti-G suit"

## Description

L'invention concerne les équipements destinés à assurer la protection physiologique des pilotes d'avion contre les effets de l'altitude et des accélérations.

La protection contre les effets de l'altitude est assurée actuellement au moyen d'une source d'oxygène respirable reliée, par un détendeur et un conduit, à un masque à oxygène appliqué de façon aussi hermétique que possible sur le visage du pilote.

La protection contre les effets des accélérations est assurée par une combinaison dite anti-G et par une surpression d'oxygène appliquée dans le masque.

Le fonctionnement de ces moyens suppose en outre, la présence d'un détecteur, généralement à masselotte, d'accélération longitudinale par rapport au corps du pilote, et d'une valve dite anti-G située sur une source de gaz comprimé. Cette source est actuellement la réserve d'oxygène respirable.

La combinaison anti-G comporte un gilet et un pantalon. Ces deux éléments comportent des vessies reliées à des tuyauteries. La tuyauterie des vessies de pantalon est reliée à la valve anti-G, la tuyauterie des vessies de gilet est reliée à une valve alimentant le masque en oxygène respirable.

Le fonctionnement est le suivant. En cas de mouvement de l'avion provoquant une accélération longitudinale dirigée de la tête vers les pieds du pilote, l'accéléromètre à masselotte provoque l'ouverture progressive de la valve anti-G et de la valve de mise en surpression du masque à oxygène.

L'ouverture de la valve anti-G provoque le gonflage des vessies de pantalon appliquant ainsi aux membres inférieurs du pilote une pression empêchant l'accumulation du sang dans les veines. L'ouverture de la valve de surpression d'oxygène provoque au niveau du masque et du gilet une surpression. La surpression respiratoire interne induite dans le masque et donc, à l'intérieur de la poitrine du pilote est compensée par la surpression externe à la poitrine du pilote induite dans les vessies de gilet. Pour éviter les lésions, les pressions internes et externes doivent rester égales.

Les équipements actuels présentent de nombreux inconvénients. L'emploi de l'oxygène respirable comme agent de gonflage (voir par exemple US-A- 4638791) oblige à employer des matériaux compatibles avec l'oxygène, ces matériaux vieillissent mal et il est nécessaire de les renouveler souvent. En cas d'incendie la présence d'oxygène au contact du corps du pilote augmente le risque et la gravité des brûlures. En cas de déchirure du gilet, l'oxygène n'arrive plus au masque.

L'efficacité du gilet suppose un ajustement sur la poitrine du pilote et un débit d'oxygène capable de compenser sans retard les variations de volume de la cage thoracique, conditions que les équipements actuels réalisent mal.

Les moyens de protection actuels qui utilisent l'oxygène respirable comme agent de gonflage augmentent la consommation d'une ressource disponible en quantité limitée sur l'avion et donc diminuent potentiellement la durée des missions en haute altitude, cette diminution devenant drastique en cas de déchirure du pantalon ou du gilet. Dans ce dernier cas on accroît de plus les risques d'incendie car l'oxygène se répand dans la cabine.

Les moyens actuels ne permettent l'utilisation des lois de dilution de l'oxygène en fonction de l'accélération que de façon médiocre. En effet, comme le gilet est en série avec le masque du pilote, son volume mort empêche la concentration d'oxygène d'évoluer dans le masque simultanément avec celle en sortie de régulateur. Il s'en suit que, lors d'une montée rapide de l'avion, la teneur en oxygène du mélange inspiré est insuffisante, ce qui n'est pas acceptable pour la sécurité du pilote.

Par ailleurs, en cas de panne de la valve anti-G, la surpression respiratoire n'est plus assurée. L'instant de gonflement des vessies destinées à protéger le pilote contre les accélérations est retardé, du fait de l'inertie du capteur (masselotte) et des équipements (valve anti-G, pantalon), réduisant ainsi l'efficacité de la protection du pilote. Le gonflage du pantalon se fait de manière brusque et uniformément, ce qui est très inconfortable pour le pilote qui ressent un effet de coup de poing et ne répond pas de manière satisfaisante aux lois d'équilibre entre la pression artérielle générée par l'accélération et la contre-pression exercée par le pantalon anti-G.

Enfin, le gonflage uniforme pénalise le retour sanguin vers le coeur.

La présente invention vise à remédier à ces inconvénients et notamment à fournir un équipement individuel du type décrit ci-dessus garantissant mieux la protection du pilote contre les effets de l'accélération, contre les effets de l'altitude, contre certains dommages provoqués éventuellement en combat, et acceptant des mélanges respiratoires conformes aux lois de dilution actuelles.

L'invention se propose ainsi de permettre d'utiliser des gaz ininflammables pour assurer le gonflement du pantalon et du gilet, pour la protection du pilote contre les effets de l'accélération, tout en assurant à la fois l'alimentation du pilote en gaz respirable compatible avec les lois physiologiques de la protection contre l'hypoxie, et en permanence une pression égale dans le gilet et dans le masque du pilote afin d'éviter les lésions pulmonaires. De plus, le dispositif selon l'invention permet de s'affranchir de la valve anti-G, de réduire les consommations d'oxygène, de permettre le libre retour sanguin vers le coeur et, de façon générale, d'améliorer le confort du pilote.

A cette fin, l'invention a pour objet un dispositif destiné à assurer la protection physiologique des pilotes d'avion contre les effets de l'altitude et des accélérations, comportant une source d'oxygène, un gilet de poitrine comportant au moins une vessie de gonflage, un masque à oxygène raccordé à la source d'oxygène par un conduit et un détendeur, un pantalon anti-G comportant au moins une vessie de gonflage raccordée à des détendeurs eux-mêmes montés sur une source commune ou séparée de gaz sous pression, des moyens pour détecter les accélérations élaborant un signal représentatif de l'accélération, dispositif caractérisé en ce que le conduit de raccordement du masque à la source d'oxygène comporte un volume déformable situé à l'intérieur d'au moins une vessie de gonflage du gilet de poitrine, cette dernière vessie étant raccordé par une tuyauterie à un détendeur monté sur une source de gaz sous pression.

L'invention a également pour objet un dispositif destiné à assurer la protection physiologique des pilotes d'avion contre les effets de l'altitude et des accélérations, comportant une source d'oxygène, un gilet de poitrine comportant au moins une vessie de gonflage, un masque à oxygène raccordé à une source d'oxygène par un conduit et un détendeur, un pantalon anti-G comportant des vessies de gonflage raccordées à des détendeurs eux-mêmes montés sur une source commune ou séparée de gaz sous pression, des moyens pour détecter les accélérations élaborant un signal représentatif de l'accélération, dispositif caractérisé en ce que la vessie de gonflage du gilet de poitrine est raccordée par des tuyauteries à des détendeurs montés sur une source de gaz sous pression, et en ce que les différentes vessies de gonflage du pantalon anti-G sont raccordées à des détenteurs dont les valeurs de pression de sorties sont calculées à partir d'une fonction croissante continue du signal représentatif de l'accélération, et dont la dérivée décroît proportionnellement à la distance du coeur du pilote à chacune des vessies gonflées par chacun des détendeurs.

Selon un mode préférentiel, les valeurs de pression de sortie des détendeurs sont calculées à partir d'une fonction croissante continue du signal représentatif de l'accélération, et dont la dérivée est proportionnelle à la distance du coeur du pilote à chacune des vessies, compte tenu de la position du pilote dans l'avion par rapport à la résultante de l'accélération.

De préférence, la fonction croissante continue tient également compte de la position des ailerons et des gouvernes de l'avion et/ou de l'altitude de celui-ci.

De préférence les moyens de détection des accélérations sont constitués par un capteur transformant les mouvements du manche de pilotage de l'avion en grandeur électrique, un intégrateur transformant cette grandeur en une résultante de commande, un calculateur de signal recevant d'une part la résultante de commande, et d'autre part une grandeur représentative de la combinaison de la vitesse de l'avion par rapport à l'air, de l'altitude, de la position des ailerons et des gouvernes de l'avion, et élaborant à partir de ces deux grandeurs, un signal représentatif de la résultante de l'accélération de l'avion décidée par le pilote, selon l'axe longitudinal du corps de celui-ci.

De préférence, chaque détendeur est commandé par un organe de commande délivrant un signal représentatif de la résultante de l'accélération qui est ensuite modulé par le calculateur générateur de la fonction croissante continue à l'intérieur de l'organe de commande, de façon que l'ouverture du détendeur soit progressive, assurant ainsi un meilleur confort au pilote.

Selon un mode préférentiel, le volume déformable situé à l'intérieur des vessies de gonflage du gilet de poitrine est constitué par une toile souple et légère traversée par la tuyauterie de raccordement dont une partie rigide perforée est à l'intérieur du volume déformable du détendeur au masque, empêchant le collapsus de ce volume déformable.

Selon un autre mode de réalisation, la source de gaz comprimé est réalisée par un prélèvement au niveau d'un étage de compresseur de l'un des moteurs de l'avion.

De préférence, on utilise des circuits de commande pour commander en séquence les différents détendeurs.

De préférence, les détendeurs sont commandés en séquence par les circuits de commande.

Selon un mode préférentiel, on réalisera un vêtement monobloc couvrant toutes les parties du corps du pilote excepté le cou et la tête.

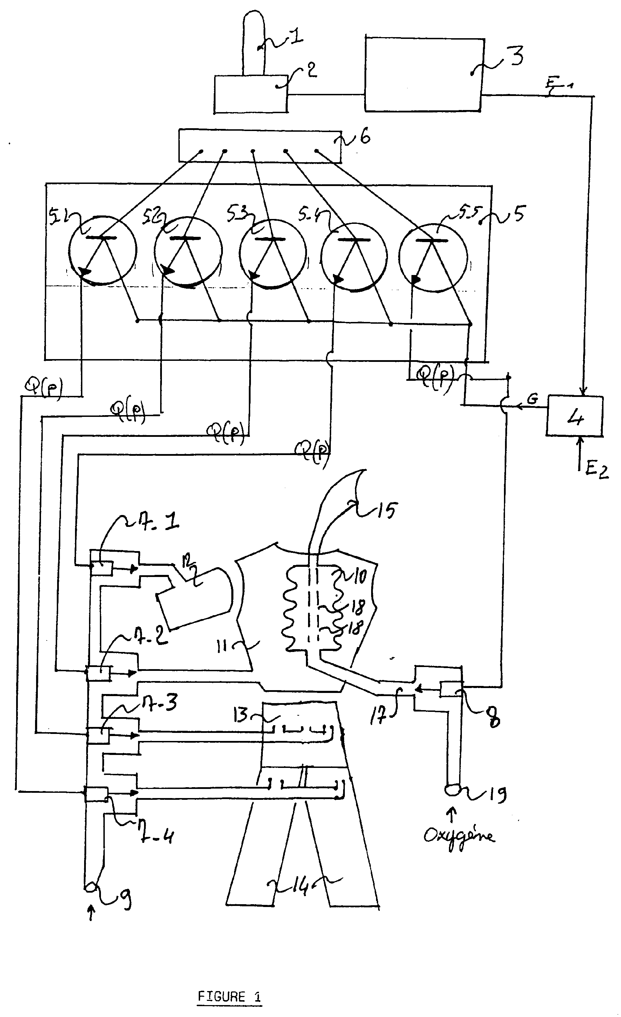

D'autres caractéristiques et avantages de l'invention apparaîtront dans la description détaillée non limitative d'un mode de réalisation de l'invention. Cette description sera faite en regard de la figure 1.

Cette figure montre, de façon schématique, les organes de commande et de régulation qui sont, pour une meilleure compréhension, représentés à une échelle plus grande que les vêtements de protection (gilet et pantalon).

Les déplacements du manche pilote 1 de l'avion sont captés par des capteurs 2 et transformés en signaux électriques. Ces signaux sont intégrés par rapport au temps dans l'intégrateur 3.

Le signal de sortie E1 de l'intégrateur 3 est envoyé sur un transformateur de signal 4 dans lequel il est combiné à un autre signal d'entrée E2 représentatif de la combinaison de la vitesse de l'avion par rapport à l'air avec l'altitude, la position des ailerons et des gouvernes de l'avion. Le signal de sortie G du calculateur générateur est ensuite traité dans un module de traitement et de répartition 5 qui élabore à partir de ce signal qui est modulé par un signal reçu d'un calculateur de fonction 6 une série de n signaux distincts ou confus (sur la figure n = 5) de la forme Q(P) = G*βp, relation dans laquelle p ≦ n.

Le générateur de fonction 6 module le signal G du calculateur de signal 4 à l'aide d'une fonction dont la dérivée est prédéterminée en fonction des différents paramètres relatifs à l'avion : vitesse, altitude, position des ailerons et des gouvernes. Le générateur de fonction 6 agit en quelque sorte comme un diviseur de la tension représentative de G qui est envoyée à chaque détendeur 7 commandant chaque vessie.

Le signe * indique que le signal de sortie Q(p) est la résultante d'une combinaison du signal G avec la fonction β(p) générée par le générateur de fonction 6.

β(p) est une fonction spécifique de la partie du corps sur laquelle on veut exercer une pression externe par l'intermédiaire d'une vessie qui prend en compte d'une part la position de la vessie par rapport au coeur quand le pilote est installé aux commandes et d'autre part les lois des pressions inhérentes à chaque vessie.

Le signal Q(p) est utilisé pour commander l'ouverture électrique ou pneumatique de détendeurs 7, montés sur une arrivée de gaz de servitude. Cette arrivée peut être l'un des étages de compression d'un moteur de l'avion. Chacun des détendeurs assure le gonflage d'une vessie, ou d'un groupe de vessies à la pression requise pour la vessie considérée et le confort du pilote. Sur la figure 1, on s'est limité au cas de quatre vessies ou groupe de vessies à savoir un groupe de 2 vessies 14 situées sur chacune des jambes du pantalon en liaison avec un détendeur 7-4, une vessie 13, située au niveau du ventre reliée à un détendeur 7-3 et une vessie 2 située au niveau du bras reliée à un détendeur 7-1.

Un détendeur 7-2 est relié à la vessie 11 située au niveau du thorax du pilote. Dans le cas de la réalisation représentée figure 1, on s'est limité à 4 détendeurs 7-1 à 7- 4 permettant de gonfler à des pressions différentes les vessies 11, 12, 13 et 14 respectivement, donnant ainsi la possibilité d'appliquer 4 pressions différentes à 4 parties du corps. Ces détendeurs sont liés à des organes de commande du module de répartition 5.

Un organe de commande 5-5 commande un détendeur 8 situé sur une arrivée de gaz respirable 19. Ce gaz peut provenir d'une bouteille ou d'un dispositif à tamis moléculaire. Le gaz respirable est conduit au masque 15 par une tuyauterie 17 qui est raccordée de façon étanche à un volume déformable 10 qu'elle traverse de part en part. A l'intérieur du volume 10, une tuyauterie rigide comportant des trous 18 est destinée à empêcher le collapsus du volume déformable. La poche est constituée d'une toile imperméable souple et légère.

Des variantes de réalisations non représentées sur la figure 1 peuvent comporter deux ou plusieurs groupes de vessies au niveau des jambes du pantalon.

Le fonctionnement est le suivant :

Le pilote par l'intermédiaire de son manche 1 commande simultanément la trajectoire de son avion et la protection anti-G associée. Les mouvements du manche sont transformés en signaux électriques par le capteur 2 puis intégrés par l'intégrateur 3. Ce signal est ensuite comparé aux paramètres avions : vitesse, altitude, position des ailerons, des gouvernes, etc, stockés dans le calculateur 4 éliminant ainsi toutes informations en provenance du manche quine sont pas liées à l'accélération. Ce signal est ensuite traité dans un module 5 de traitement et de répartition qui élabore un signal épuré spécifique à chaque vessie en tenant compte de la position de la vessie par rapport au coeur du pilote installé dans l'avion, de la pression à générer spécifiquement à chaque vessie.

Le signal qui vient des commandes de vol est modulé par un autre signal électrique qui provient du calculateur générateur de fonction avant d'être envoyé au détendeur.

Ce module 5 envoie alors, en fonction de l'accélération réelle de l'avion n signaux spécifiques à chaque détendeur. Ce module reçoit d'un calculateur générateur de fonction 6 un signal dont la grandeur est déterminée en fonction de la partie du corps à laquelle elle est appliquée, de sa position par rapport au coeur et de la loi de pression applicable. La vessie dont la pression est commandée par le moyen 5 est gonflée en gaz de servitude par les détendeurs 7.

Le but est d'obtenir une loi de gonflage particulière à chaque vessie en fonction des parties du corps à protéger de façon que la dérivée de la fonction croissante continue spécifique à chaque vessie décroisse à mesure que les vessies sont situées de plus en plus près du coeur. De la sorte on obtient un gradient discontinu de pressions favorisant le retour du sang vers le coeur et on évite l'effet de coup de poing.

L'idéal serait d'avoir un gradient continu de pression, mais l'expérience montre qu'un pilote installé dans un avion nécessite quatre niveaux de pression dont deux au niveau du pantalon (bas, haut) et deux au niveau du gilet (manche, torse) pour obtenir une bonne amélioration du confort du pilote.

Les séquences et les pressions de gonflage sont telles que la valeur de la pression délivrée par le détendeur 7-2 qui commande le gonflage de la vessie 1, à l'intérieur de laquelle est située le volume déformable 10 est toujours égale à celle de la pression délivrée par le détendeur 8 qui commande l'arrivée de gaz respirable au masque 15.

Cette égalité est destinée à assurer l'équilibre des pressions internes et externes sur le thorax du pilote. Le volume déformable 10 assure une régulation de cet équilibre. En effet, grâce aux trous 18, le volume 10 est à la pression du masque 15, une surpression par rapport à la pression régnant dans la vessie 11 provoquant un accroissement du volume 10 et donc une diminution de la pression jusqu'à l'équilibre. De même une dépression serait compensée par une diminution du volume 10.

On compense de la sorte les variations de volume thoracique dues notamment à la respiration du pilote.

## Revendications

1. Dispositif destiné à assurer la protection physiologique des pilotes d'avion contre les effets de l'altitude et des accélérations, comportant une source d'oxygène (19), un gilet de poitrine muni d'au moins une vessie de gonflage (11), un masque à oxygène (15) raccordé à une source d'oxygène (19) par un conduit (17) et un détendeur (8), un pantalon anti-G comportant au moins une vessie de gonflage raccordée à un détendeur monté sur une source commune ou séparée de gaz sous pression, des moyens pour détecter les accélérations élaborant un signal représentatif de l'accélération, caractérisé en ce que le conduit de raccordement (17) du masque (15) à la source d'oxygène (19) comporte un volume déformable (10) situé à l'intérieur de la vessie de gonflage (11) du gilet de poitrine, cette dernière vessie de gonflage (11) étant raccordée par une tuyauterie à un détendeur lui-même monté sur une source de gaz sous pression.

2. Dispositif destiné à assurer la protection physiologique des pilotes d'avion contre les effets de l'altitude et des accélérations, comportant une source d'oxygène (19), un gilet de poitrine comportant au moins une vessie de gonflage (11), un masque à oxygène (15) raccordé à une source d'oxygène (19) par un conduit (17) et un détendeur (8), un pantalon anti-G comportant des vessies de gonflage raccordées à des détendeurs eux-mêmes montés sur une source de gaz sous pression, des moyens pour détecter les accélérations élaborant un signal représentatif de l'accélération, caractérisé en ce que la vessie de gonflage (11) du gilet de poitrine est raccordée par des tuyauteries à des détendeurs montés sur une source commune ou séparée de gaz sous pression (9), et en ce que les différentes vessies de gonflage du pantalon anti-G (13,14) sont raccordées à des détendeurs (7) dont les valeurs de pressions de sorties sont calculées à partir d'une fonction croissante continue du signal représentatif de l'accélération , et dont la dérivée décroît proportionnellement à la distance du coeur du pilote à chacune des vessies gonflées par chacun des détendeurs (7).

3. Dispositif selon l'une des revendications 1 ou 2, caractérisé en ce que les valeurs de pression de sortie des détendeurs (7) sont calculées à partir d'une fonction croissante continue du signal représentatif de l'accélération, et dont la dérivée est proportionnelle à la distance du coeur du pilote à chacune des vessies, compte tenu de la position du pilote dans l'avion par rapport à la résultante de l'accélération.

4. Dispositif selon l'une des revendications 1 à 3, caractérisé en ce que la fonction croissante continue tient également compte de la position des ailerons et des gouvernes de l'avion et/ou de l'altitude de celui-ci.

5. Dispositif selon l'une des revendications 1 à 4, caractérisé en ce que les moyens de détection des accélérations sont constitués par un capteur (2) transformant les mouvements du manche de pilotage de l'avion en grandeur électrique, un intégrateur (3) transformant cette grandeur en une résultante de commande, un calculateur de signal (4) recevant d'une part la résultante de commande et d'autre part une grandeur représentative de la combinaison de la vitesse de l'avion par rapport à l'air, de l'altitude, de la position des ailerons et des gouvernes de l'avion, et élaborant, à partir de ces deux grandeurs, un signal représentatif de la résultante de l'accélération de l'avion décidée par le pilote, selon l'axe longitudinal du corps de celui-ci.

6. Dispositif selon les revendications 2 à 5, caractérisé en ce que chaque détendeur (7) est commandé par un organe de commande (5) délivrant un signal représentatif de la résultante de l'accélération qui est ensuite modulé par un calculateur générateur (6) de la fonction croissante continue à l'intérieur de l'organe de commande, de façon que l'ouverture de chaque détendeur (7) soit progressive.

7. Dispositif selon la revendication 1, caractérisé en ce que le volume déformable (10) est constitué par une toile souple et légère traversée par la tuyauterie de raccordement (17) dont une partie rigide perforée (18) est à l'intérieur du volume déformable (10) du détendeur (8) au masque (15).

8. Dispositif selon la revendication 2, caractérisé en ce que la source de gaz comprimé (9) est un prélèvement au niveau d'un étage de compresseur de l'un des moteurs de l'avion.

9. Dispositif selon la revendication 2 caractérisé en ce que les détendeurs (7-1, 7-2...) sont commandés en séquence par des circuits de commande (5-1...5-2...5n).

10. Application du dispositif selon l'une quelconque des revendications 1 à 9, à un ensemble monobloc constitué d'un vêtement couvrant toutes les parties du corps du pilote excepté le cou et la tête.

## Patentansprüche

1. Vorrichtung zur Gewährleistung des physiologischen Schutzes der Flugzeugpiloten gegen Höhen- und
Beschleunigungsauswirkungen, mit einer Sauerstoffquelle (19), einer Brustweste mit zumindest einer Blase (11), einer Sauerstoffmaske (15), die mittels einer Leitung (17) und einem Druckminderventil (8) an eine Sauerstoffquelle (19) angeschlossen ist, einer Anti-G-Hose mit zumindest einer Blase, die an ein Druckminderventil angeschlossen ist, das seinerseits auf einer gemeinsamen oder getrennten Druckgasquelle montiert ist, mit Mitteln zur Erfassung der Beschleunigungen, die ein die Beschleunigung darstellendes Signal erarbeiten, dadurch gekennzeichnet, daß die Anschlußleitung (17) der Maske (15) an die Sauerstoffquelle (19) ein verformbares Volumen (10) aufweist, das innerhalb zumindest einer Blase (11) der Brustweste angeordnet ist, wobei diese Blase (11) über eine Rohrleitung an ein auf eine Druckgasquelle montiertes Druckminderventil angeschlossen ist.

2. Vorrichtung zur Gewährleistung des physiologischen Schutzes der Flugzeugpiloten gegen Höhen- und
Beschleunigungsauswirkungen, mit einer Sauerstoffquelle (19), einer Brustweste mit zumindest einer Blase (11), einer mittels einer Leitung (17) und eines Druckmindestventils (8) an eine Sauerstoffquelle (19) angeschlossene Sauerstoffmaske (15), einer Anti-G-Hose mit Blasen, die an Druckminderventile angeschlossene sind, die ihrerseits auf eine Druckgasquelle montiert sind, mit Mitteln zur Erfassung der Beschleunigungen, die ein die Beschleunigung darstellendes Signal erarbeiten, dadurch gekennzeichnet, daß die Blase (11) der Brustweste mittels Rohrleitungen an auf eine Druckgasquelle montierte Druckminderventile angeschlossen ist, und daß die einzelnen Blasen der Anti-G-Hose (13, 14) an Druckminderventile (7) angeschlossen sind, deren Ausgangsdruckwerte ab einer steigenden, kontinuierlichen Funktion des die Beschleunigung darstellenden Signals kalkuliert werden, und deren Differential proportional zur Entfernung des Herzens des Piloten zu den einzelnen, von den jeweiligen Druckminderventilen (7) aufgeblähten Blasen abnimmt.

3. Vorrichtung nach einem der Ansprüche 1 oder 2, dadurch gekennzeichnet, daß die Ausgangsdruckwerte der Druckminderventile (7) ab einer steigenden, kontinuierlichen Funktion des die Beschleunigung darstellenden Signals kalkuliert werden, deren Differential proportional zur Entfernung des Herzens des Piloten zu den einzelnen Blasen ist, unter Berücksichtigung der Position des Piloten im Flugzeug in bezug auf die Resultierende der Beschleunigung.

4. Vorrichtung nach einem der Ansprüche 1 bis 3, dadurch gekennzeichnet, daß die steigende, kontinuierliche Funktion ebenfalls die Position der Flügel und der Ruder des Flugzeugs und/oder seine Höhe berücksichtigt.

5. Vorrichtung nach einem der Ansprüche 1 bis 4, dadurch gekennzeichent, daß die Erfassungsmittel der Beschleunigungen aus einem Fühler (2), der die Bewegungen des Steuerknüppels des Flugzeug in eine elektrische Größe umwandelt, einem Integrator (3), der diese Größe in eine Steuerresultierende umwandelt, einem Signalrechner (4), der einerseits die Steuerresultierende erhält und andererseits eine die Kombination der Flugzeuggeschwindigkeit in bezug auf die Luft, die Höhe, die Flugzeugflügel und -ruder darstellende Größe, und der ausgehend von diesen beiden Größen ein Signal erarbeitet, das die Resultierende der Beschleunigung des Flugzeugs darstellt, die vom Piloten gemäß der Längsachse des Flugzeugkörpers gewählt wurde, bestehen.

6. Vorrichtung nach einem der Ansprüche 2 bis 5, dadurch gekennzeichnet, daß jedes Druckminderventil (7) von einem Steuerorgan (5) gesteuert wird, das ein die Beschleunigungsresultierende darstellendes Signal liefert, das anschließend von einem Rechner (6) moduliert wird, der die steigende, kontinuierliche Funktion innerhalb des Steuerorgans erzeugt, so daß die Öffnung des jeweiligen Druckminderventils (7) progressiv erfolgt.

7. Vorrichtung nach Anspruch 1, dadurch gekennzeichnet, daß das verformbare Volumen (10) aus einem geschmeidigen und leichten Stoff besteht, der von der Anschlußrohrleitung (17) durchlaufen wird, wovon sich ein starrer, gelochter Teil (18) innerhalb des verformbaren Volumens (10) des Druckminderventils (8) der Maske (15) befindet.

8. Vorrichtung nach Anspruch 2, dadurch gekennzeichnet, daß die Druckgasquelle (9) eine Anzapfung einer Kompressorenstufe einer der Flugzeugmotoren ist.

9. Vorrichtung nach Anspruch 2, dadurch gekennzeichnet, daß die Druckminderventile (7-1, 7-2,...) sequenzweise von Schaltkreisen (5-1...5-2, ... 5n) gesteuert werden.

10. Anwendung der Vorrichtung nach einem der Ansprüche 1 bis 9 auf einen Monoblock-Anzug, bestehend aus einem Kleidungsstück, das alle Körperteile des Piloten, außer Hals und Kopf, bedeckt.

## Claims

1. Device intended to provide pilots with physiological protection against the effects of high altitudes and acceleration, comprising an oxygen source (19), a jacket worn around the chest comprising at least one inflatable bladder (11) an oxygen mask (15) connected to an oxygen source (19) via a pipe (17) and a pressure regulator (8), a pair of anti-G trousers comprising at least one inflatable bladder connected to a pressure regulator fitted on either a shared or separate pressurized gas source, means for sensing acceleration that generate a signal that is representative of acceleration, characterized in that the connecting pipe (17) between the mask (15) and the oxygen source (19) comprises a deformable shape (10) located inside the inflatable bladder (11) in the jacket around the chest, with the latter bladder (11) being connected by a pipe to a pressure regulator fitted on a pressurized gas source.

2. Device intended to provide pilots with physiological protection against the effects of high altitudes and acceleration, comprising an oxygen source (19), a jacket worn around the chest comprising at least one inflatable bladder (11) an oxygen mask (15) connected to an oxygen source (19) via a pipe (17) and a pressure regulator (8), a pair of anti-G trousers comprising inflatable bladders connected to pressure regulators fitted on a pressurized gas source, means for sensing acceleration that generate a signal that is representative of acceleration, characterized in that the inflatable bladder (11) of the jacket worn around the chest is connected by pipes to pressure regulators fitted on a shared or separate pressurized gas source (9) and in that the various inflatable bladders of the anti-G suit (13, 14) are connected to pressure regulators (7) whose outlet pressures are calculated from a continuous increasing function of the signal representative of acceleration and whose derivative decreases in proportion to the distance of the pilot's heart from each of the bladders inflated by each of the pressure regulators (7).

3. Device according to claim 1 or 2, characterized in that the outlet pressures of the pressure regulators (7) are calculated from a continuous increasing function of the signal representative of acceleration and whose derivative is in proportion to the distance of the pilot's heart from each of the bladders, with account being taken of the pilot's position inside the aircraft in relation to the resultant of the acceleration.

4. Device according to one of claims 1 to 3, characterized in that the continuous increasing function also takes account of the position of the aircraft's ailerons and elevators and/or its altitude.

5. Device according to one of claims 1 to 4, characterized in that the means for sensing acceleration comprise a transducer (2) converting the movements of the aircraft control stick into an electrical signal, an integrator (3) converting this signal into a control resultant, a signal computer (4) receiving the control resultant and a signal representative of the combination of the aircraft's speed in relation to the air, altitude, and position of the ailerons and elevators and generating, from these two signals, a signal that is representative of the resultant of the acceleration chosen by the pilot, along the longitudinal axis of his body.

6. Device according to claims 2 to 5, characterized in that each pressure regulator (7) is controlled by a control device (5) emitting a signal that is representative of the resultant of acceleration which is then modulated by a computer (6) that generates the continuous increasing function, inside the control device so that each pressure regulator (7) opens gradually.

7. Device according to claim 1, characterized in that the deformable shape (10) comprises a supple and lightweight fabric that is traversed by the connecting pipe (17) of which a perforated rigid part (18) is inside the deformable shape (10) of the pressure regulator (8) at the mask (15).

8. Device according to claim 2, characterized in that the compressed gas source (9) is a tapping from a compressor section in one of the aircraft's engines.

9. Device according to claim 2, characterized in that the pressure regulators (7-1, 7-2 etc.) are controlled sequentially by control circuits (5-1, 5-2, 5-n).

10. Application of the device according to any of claims 1 to 9 to a one-piece ensemble comprising a garment that covers all the pilot's body apart from the neck and head.
